(19) Europäisches Patentamt / European Patent Office / Office européen des brevets

(11) **EP 1 791 728 B1**

(12) **EUROPÄISCHE PATENTSCHRIFT**

(45) Veröffentlichungstag und Bekanntmachung des Hinweises auf die Patenterteilung:
**06.05.2009 Patentblatt 2009/19**

(21) Anmeldenummer: **05777730.2**

(22) Anmeldetag: **11.08.2005**

(51) Int Cl.:
**B60R 21/01** $^{(2006.01)}$

(86) Internationale Anmeldenummer:
**PCT/EP2005/053963**

(87) Internationale Veröffentlichungsnummer:
**WO 2006/032582 (30.03.2006 Gazette 2006/13)**

(54) **VERFAHREN ZUM AUSWERTEN VON REFLEKTORANTWORTSIGNALEN EINES SYSTEMS ZUR ERKENNUNG EINER SITZBELEGUNG**

METHOD FOR EVALUATING REFLECTOR ANSWER SIGNALS OF A SYSTEM FOR RECOGNISING THE OCCUPANCY OF A SEAT

PROCEDE D'EVALUATION DE SIGNAUX DE REPONSE DE REFLECTEUR D'UN SYSTEME DE DETECTION DE L'OCCUPATION D'UN SIEGE

(84) Benannte Vertragsstaaten:
**DE ES FR GB IT**

(30) Priorität: **23.09.2004 DE 102004046189**

(43) Veröffentlichungstag der Anmeldung:
**06.06.2007 Patentblatt 2007/23**

(73) Patentinhaber: **Continental Automotive GmbH 30165 Hannover (DE)**

(72) Erfinder:
• **RÖSEL, Birgit**
  **93055 Regensburg (DE)**
• **STIELOW, Arnd**
  **93059 Regenburg (DE)**
• **WAGNER, Roland**
  **93093 Donaustauf (DE)**
• **HOFBECK, Klaus**
  **92318 Neumarkt (DE)**

(56) Entgegenhaltungen:
WO-A-20/04045917    US-B1- 6 199 904
US-B1- 6 462 701

**Beschreibung**

Die vorliegende Erfindung betrifft ein Verfahren zum Auswerten von Reflektorantwortsignalen eines Systems zur Erkennung einer Sitzbelegung eines Sitzes, insbesondere in einem Kraftfahrzeug, wobei das System mindestens eine Basisstation mit einer Sendeeinrichtung zum Aussenden von Signalen und mit einer Empfangseinrichtung zum Empfangen der an mindestens einem dem Sitz zugeordneten Reflektor reflektierten Reflektorantwortsignalen zur Erkennung einer Sitzbelegung des Sitzes aufweist.

Ein Verfahren gemäß dem Oberbegriff von Anspruch 1 ist aus WO 2004/045917 bekannt.

Derzeit sind eine Vielzahl unterschiedlicher Systeme zur Sitzbelegungserkennung bekannt, die aber hier nicht allesamt weiter ausgeführt werden sollen. Ein neuartiges, derzeit von der Anmelderin entwickeltes, noch nicht veröffentlichtes System zur Sitzbelegungserkennung ist das so genannte HOBBIT-System (= Human-Observation-by-Beam-Interference-Technology). Das HOBBIT-System besteht aus einer zentralen Basisstation und einzelnen Reflektoren im Sitz zur Erkennung einer jeweiligen Sitzbelegung. Bei dem HOBBIT-System wird eine Beugung, Dämpfung und/oder Reflektion von hochfrequenten Signalen (zum Beispiel 2,45 GHz Wellen) nutzbringend angewandt, um die Belegung des Sitzes mit Personen zu erkennen. Bei dem HOBBIT-System wird ein Raum aller zu überwachenden Sitzplätze innerhalb einer Fahrgastzelle eines Fahrzeuges mit dem hochfrequenten, elektromagnetischen Wellenfeld ausgeleuchtet. Dazu sendet die Basisstation Signale aus, die auf die Reflektoren treffen, an welchen sie moduliert, reflektiert und von der Basisstation wiederum empfangen werden.

Die so erhaltenen Reflektorantworten werden hinsichtlich ihres Pegels ausgewertet. Dazu wird im allgemeinen eine so genannte Dämpfungsdicke d für jeden Reflektor des Sitzes bestimmt, welche ein Maß für die Dämpfung durch ein Material mit vorgegebener Dicke d darstellt. Die Dämpfungsdicke d bezeichnet beispielsweise den Logarithmus aus dem Verhältnis aus empfangenem Pegel des Antwortsignals und gesendetem Pegel oder aus dem Verhältnis aus empfangenem Pegel des Antwortsignals und einem zugeordneten Referenzpegel bzw. Referenzwert, welcher im folgenden als Antwortsignal-Referenzwert bezeichnet wird. Der Wert der Dämpfungsdicke d ist umso größer, je geringer der Pegel des von der Basisstation empfangenen reflektierten Signals ist. Die Dämpfungsdicke d ist also ein Maß für die Sitzbelegung, so dass aus der Dämpfungsdicke d auf die Belegung des Sitzes mit einer Person oder einem Gegenstand geschlossen werden kann.

Für den Fall der Bestimmung der Dämpfungsdicke d unter Verwendung von Antwortsignal-Referenzwerten besitzen die Referenzwerte eine entscheidende Bedeutung darin, dass bei nicht direkt bestimmten Referenzwerten falsche Dämpfungsdicken d bestimmt und unter Umständen eine fehlerhafte Klassifizierung der Sitzbelegung durchgeführt wird.

Ein allgemeines Problem besteht jedoch darin, dass im unbelegten Sitzzustand des Sitzes bestimmte Referenzwerte mit der Sitzposition des Sitzes variieren können, da eine vertikale und/oder horizontale Veränderung der Sitzposition sowie eine Veränderung der Rückenlehne des Sitzes das Wellenfeld bzgl. einzelner in dem Sitz vorgesehener Reflektoren zu der Basisstation ändern. Somit kann ein von der Sitzposition des Sitzes unabhängiger Referenzwert des Sitzes in manchen Sitzpositionen zu ungenau bestimmt sein und eine fehlerhafte Klassifizierung auslösen.

Somit liegt der vorliegenden Erfindung die Aufgabe zugrunde, ein Verfahren zu schaffen, welches auf einfache und zuverlässige Weise eine Auswertung von Reflektorantwortsignalen mittels zuverlässig bestimmten Referenzwerten gewährleistet.

Erfindungsgemäß wird diese Aufgabe durch das Verfahren mit den Merkmalen des Patentanspruchs 1 gelöst.

Die der vorliegenden Erfindung zugrunde liegende Idee besteht darin, dass zum Auswerten von Reflektorantwortsignalen des Systems zur Erkennung einer Sitzbelegung eines Sitzes vorab mehrere jeweils einer vorbestimmten Sitzposition des Sitzes zugeordnete Reflektorantwort-Leerwerte für den sich im unbelegten Sitzzustand befindlichen Sitz gemessen werden, wobei aus diesen vorab gemessenen Reflektorantwort-Leerwerten unter Verwendung eines vorbestimmten Algorithmus mindestens ein dem Sitz zugeordneter Reflektorantwort-Referenzwert bestimmt wird. Im Klassifizierungsbetrieb werden die durch den mindestens einen Reflektor reflektierten Reflektorantwortsignale durch die Empfangseinrichtung empfangen, wobei unter Verwendung des mindestens einen vorab bestimmten Reflektorantwort-Referenzwertes die Dämpfungsdicke d berechnet wird.

Somit weist die vorliegende Erfindung gegenüber dem Stand der Technik den Vorteil auf, dass für vorbestimmte Sitzpositionen des Sitzes entsprechend zugeordnete Reflektörantwort-Leerwerte gemessen werden, welche die Grundlage für eine Berechnung mindestens eines Referenzwertes des Sitzes darstellen. Somit gehen die einzelnen Sitzpositionen in den Algorithmus für die Berechnung mindestens eines Referenzwertes mit ein, so dass auch in unterschiedlichen Sitzpositionen des Sitzes eine zuverlässige Auswertung der Reflektorantwortsignale und somit eine zuverlässige Klassifizierung gewährleistet wird. Dem Sitz kann somit ein Referenzwert zugeordnet werden, welcher unabhängig von der eigentlichen Sitzposition eine zuverlässige Referenz darstellt und einen großen Signalabstand zwischen einem unbelegten Sitzzustand und einem belegten Sitzzustand gewährleistet. Dadurch wird das System unempfindlicher hinsichtlich einer falschen Klassifizierung.

Zudem weist die vorliegende Erfindung den Vorteil auf, dass für jeden Reflektor des Sitzes lediglich einmalig ein zugeordneter Referenzwert bestimmt werden muss. Dies kann im Rahmen der Entwicklung für einen Fahrzeugtyp oder eventuell einen vorgegebenen Sitzaufbau erfolgen. Damit entfällt die aufwendige und kostspielige individuelle Referenzwertbestimmung für jedes einzelne Fahrzeug am Ende der Produktionsschleife. Ferner ist auch eine Bestimmung der augenblicklichen genauen Sitzposition für eine Ermittlung des Belegungszustandes des Sitzes nicht erforderlich, da der Referenzwert unabhängig von der Sitzposition bestimmt wird.

In den Unteransprüchen finden sich vorteilhafte Verbesserungen und Ausgestaltungen des im Patentanspruch 1 angegebenen Verfahrens.

Gemäß einer bevorzugten Weiterbildung wird für vorbestimmte Sitzpositionen, die sich vorzugsweise aus horizontaler Position, vertikaler Position und/oder Neigung der Rückenlehne des Sitzes zusammensetzen, jeweils ein zugeordneter Reflektorantwort-Leerwert gemessen. Beispielsweise werden die Reflektorantwort-Leerwerte sowohl in der obersten als auch in der untersten vertikalen Sitzposition des Sitzes über alle horizontalen Sitzpositionen des Sitzes gemessen, vorzugsweise für jeden einzelnen Reflektor des Sitzes separat. Anschließend wird der mindestens eine Reflektorantwort-Referenzwert als Mittelwert, gewichteter Mittelwert, Minimum, Minimum unter Berücksichtigung der Standard-Abweichung, oder dergleichen, der gemessenen Reflektorantwort-Leerwerte bestimmt. Dabei kann für den Sitz ein gemeinsamer Reflektorantwort-Referenzwert oder für jeden Reflektor des Sitzes ein eigener Reflektorantwort-Referenzwert bestimmt und zugeordnet werden. Ein derart bestimmter Referenzwert ermöglicht vorteilhaft eine schnelle und einfache Auswertung, da zu jedem Reflektor lediglich ein einziger Referenzwert verwendet wird.

Gemäß einem weiteren bevorzugten Ausführungsbeispiel wird für jede mögliche Sitzposition des Sitzes jeweils ein Reflektorantwort-Referenzwert bestimmt, vorteilhaft für jeden einzelnen Reflektor. Vorteilhaft werden die einzelnen bestimmten Reflektorantwort-Referenzwerte, die beispielsweise jedem Reflektor und/oder jeder möglichen Sitzposition zugeordnet sind, in einer Speichereinrichtung, beispielsweise in einer Referenzwert-Tabelle, abgespeichert.

Vorzugsweise werden in der Empfangseinrichtung der Basisstation mindestens zwei Empfangsantennen für eine so genannte Antennen-Diversity vorgesehen, wobei die mindestens zwei Empfangsantennen mit einem definierten Abstand, beispielsweise in etwa der halben Wellenlänge der Reflektorantwortsignale, voneinander beabstandet sind. Dabei gehen die Messungen der Reflektorantwort-Leerwerte an den mindestens zwei Empfangsantennen zur vorab Bestimmung des mindestens einen Reflektorantwort-Referenzwertes in den vorbestimmten Algorithmus mit ein.

Gemäß einem weiteren bevorzugten Ausführungsbeispiel kann eine Nachkalibrierung des mindestens einen bestimmten Reflektorantwort-Referenzwertes automatisch oder manuell durchgeführt werden.

Durch eine Bestimmung mehrerer Referenzwerte wird eine optimale Abstimmung der Referenzwerte auf die augenblickliche Sitzposition ermöglicht, wodurch eine höhere Genauigkeit der Bestimmung der Dämpfungsdicke d gewährleistet wird.

Die Erfindung wird nachfolgend anhand der in den schematischen Figuren der Zeichnung angegebenen Ausführungsbeispiele näher erläutert. Es zeigen dabei:

Figur 1     eine schematische Darstellung eines Systems zur Sitzbelegungserkennung eines Sitzes gemäß einem Ausführungsbeispiel der vorliegenden Erfindung;

Figur 2     eine graphische Darstellung der Abhängigkeit des Pegels der Reflektorantwort-Leerwerte von der Sitzposition; und

Figur 3     eine graphische Darstellung der Abhängigkeit des Pegels der Reflektorantwort-Leerwerte von der Empfangsantennenposition.

In den Figuren der Zeichnung bezeichnen gleiche Bezugszeichen gleiche oder funktionsgleiche Komponenten, soweit nichts Gegenteiliges angegeben ist.

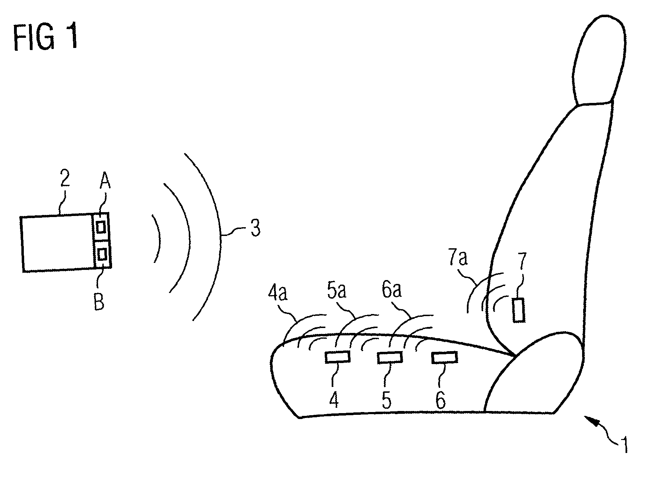

Figur 1 zeigt eine schematische Darstellung eines Systems zur Sitzbelegungserkennung unter Verwendung hochfrequenter Signale. Ein Sitz 1 wird von einem HF-Sender in einer Basisstation 2 mit einem hochfrequenten elektromagnetischen Wellenfeld 3 ausgeleuchtet. Der Sitz 1 weist an unterschiedlichen Stellen mehrere Reflektoren 4, 5, 6, 7 auf, die das HF-Wellenfeld 3 reflektieren. Die Reflektoren 4, 5, 6, 7 können die reflektierten HF-Wellenfelder 4a, 5a, 6a, 7a moduliert zurücksenden. Reflektierte HF-Wellenfelder 4a, 5a, 6a, 7a werden von einem HF-Empfänger in der Basisstation 2 empfangen. Dadurch ist eine Zuordnung der reflektierten HF-Wellenfelder 4a, 5a, 6a, 7a zu den einzelnen Reflektoren 4, 5, 6, 7 möglich.

Betreibt man das HOBBIT-System mit einem sich in einem unbelegten Zustand befindlichen Sitz 1, wie in Figur 1 dargestellt ist, so erreichen die von der Basisstation 2 ausgesendeten elektromagnetischen Wellen 3 die Reflektoren 4, 5, 6 und 7 nahezu ungedämpft bzw. lediglich geringfügig gedämpft. Die derart empfangenen Reflektorantwortsignale stellen den so genannten Leerwert dar, d.h. die Reflektorantworten eines sich im unbelegten Zustand befindlichen Sitzes.

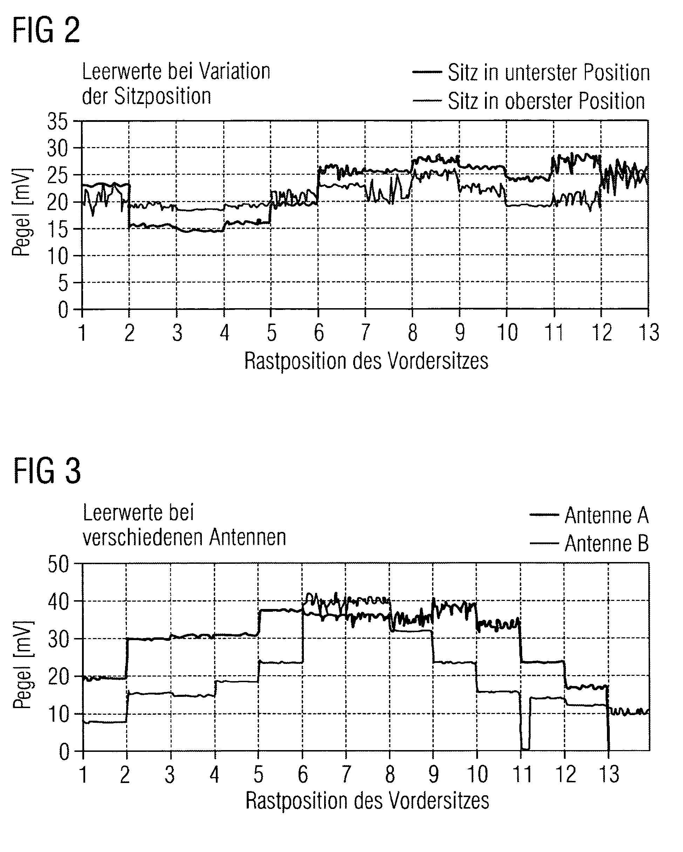

Erfindungsgemäß werden ein oder mehrere Referenzwerte aus vorab gemessenen Leerwerten bestimmt und gegebenenfalls in einer geeigneten Speichereinrichtung in Referenzwert-Tabellen abgespeichert und einzelnen Reflektoren und/oder einzelnen Sitzpositionen zugeordnet. Dies wird im folgenden unter Bezugnahme auf die Figuren 2 und 3 näher erläutert.

Figur 2 illustriert eine graphische Darstellung der Abhängigkeit des Pegels der an der Basisstation 2 empfangenen Reflektorantwort-Leerwerte von der jeweiligen Sitzposition des Sitzes 1. Auf der Abszisse sind dabei die einzelnen horizontalen Rastpositionen des Sitzes 1, beispielsweise des Vordersitzes, dargestellt und mit den Rastpositionsnummern 1 bis 13 gekennzeichnet. Dabei entspricht 1 der horizontal vordersten Sitzposition und 13 der horizontal hintersten Sitzposition. Die dicker dargestellte Messkurve in Figur 2 kennzeichnet eine Messung des Leerwertpegels in der untersten vertikalen Sitzposition und die dünner dargestellte Messkurve den Leerwertpegel in der vertikal obersten Sitzposition des Sitzes.

Aus Figur 2 ist ersichtlich, dass der Pegel der empfangenen Leerwerte von der jeweiligen Sitzposition des Sitzes 1 abhängt, wobei in Figur 2 lediglich die vertikale und horizontale Variierung des Sitzes 1 berücksichtigt wurden. Es ist für einen Fachmann allerdings offensichtlich, dass weitere Positionsänderungen des Sitzes 1, beispielsweise eine Änderung der Neigung der Rückenlehne, der Sitzfläche und/oder anderer einzelner Teile des Sitzes, ebenfalls mitberücksichtigt werden können und von dem vorliegenden Erfindungsgedanken mitumfasst sind.

Eine Variierung des Leerwertpegels bei Veränderung der Sitzposition findet seine Ursache im Wesentlichen darin, dass sowohl der Winkel als auch der Abstand der einzelnen Reflektoren 4, 5, 6, 7 zu der Basisstation 2 sowie die Ausbreitungsbedingungen mit der jeweiligen Sitzposition verändert werden, so dass der Pegel des jeweiligen Leerwertes entsprechend schwankt.

Aufgrund der Veränderung des Reflektorantwort-Leerwertes in Abhängigkeit von der Sitzposition aufgrund des unterschiedlichen Einfallswinkels, der Entfernung zur Basisstation sowie den unterschiedlichen Ausbreitungsbedingungen durch die Veränderung der Sitzposition wird gemäß einem ersten bevorzugten Ausführungsbeispiel ein Referenzwert für jeden einzelnen Reflektor 4, 5, 6, 7 des Sitzes 1 aus den gemessenen Leerwerten bei Variation der Sitzposition sowohl in der untersten vertikalen als auch in der obersten vertikalen über alle horizontalen möglichen Sitzpositionen des Sitzes 1 bestimmt, wie in Figur 2 graphisch exemplarisch für einen Reflektor dargestellt ist. Beispielsweise kann aus den einzelnen gemessenen Leerwerten aus den Messkurven in Figur 2 ein einem Reflektor des Sitzes 1 zugeordneter Referenzwert beispielsweise als Minimum oder Mittelwert der gemessenen Leerwerte definiert werden. Allerdings ist für einen Fachmann offensichtlich, dass auch andersartige Algorithmen für eine Berechnung des Referenzwertes aus den gemessenen Leerwerten möglich ist, beispielsweise eine zusätzliche Berücksichtigung der Standard-Abweichungen, Variationen, oder dergleichen.

Vorzugsweise werden für jeden Reflektor 4, 5, 6, 7 aus Figur 1 Leerwert-Messungen bei Variation der Sitzposition gemäß Figur 2 vorgenommen und aufgezeichnet, wie oben bereits erläutert wurde. Daraus kann jedem Reflektor 4, 5, 6, 7 ein charakteristischer Referenzwert aus den gemessenen Leerwerten nach einem vorbestimmten Algorithmus bestimmt und zugeordnet werden. Ein nach diesem Ausführungsbeispiel bestimmter Referenzwert ermöglicht dabei eine schnelle und einfache Auswertung der empfangenen Reflektorantwortsignalen während eines normalen Betriebes des Systems, da zu jedem Reflektor 4, 5, 6, 7 lediglich ein einziger Referenzwert verwendet wird.

Gemäß einem weiteren bevorzugten Ausführungsbeispiel kann aus den einzelnen Reflektoren 4, 5, 6, 7 zugewiesenen Referenzwerten ein gemeinsamer Referenzwert für den Sitz 1 wiederum nach einem vorbestimmten Algorithmus berechnet werden, so dass bei einem Auswertebetrieb zum Auswerten von Reflektorantwortsignalen bei einer Sitzbelegungsklassifizierung ein noch geringerer und schneller durchführbarer Rechenaufwand gewährleistet wird. Selbstverständlich können auch lediglich bestimmte Reflektoren miteinander derart kombiniert werden, dass ihnen ein gemeinsamer Referenzwert zugewiesen wird.

Gemäß einem weiteren bevorzugten Ausführungsbeispiel werden vorzugsweise vorbestimmten oder allen möglichen Sitzpositionen vorab bestimmte Referenzwerte zugewiesen. Dabei werden die vorab gemessenen Leerwerte der einzelnen Sitzpositionen des Sitzes 1, wie in Figur 2 dargestellt, gemessen und beispielsweise in Referenzwert-Tabellen in einer geeigneten Speichereinrichtung abgespeichert. Im Sitzbelegungs-Erkennungsbetrieb des Systems erfassen vorzugsweise zusätzlich an dem Sitz 1 montierte Sensoren die jeweilige Sitzposition und weisen dieser Sitzposition den entsprechenden Referenzwert aus der Referenzwert-Tabelle für eine Auswertung der empfangenen Reflektorantwortsignale zu. Durch die Bestimmung mehrerer Referenzwerte in Abhängigkeit von der Sitzposition des Sitzes 1 wird eine optimale Abstimmung der Referenzwerte auf die Sitzposition ermöglicht, wodurch eine höhere Genauigkeit der Bestimmung der Dämpfungsdicke d erreicht werden kann.

Analog zum ersten Ausführungsbeispiel können bei der jeweiligen Sitzposition alle möglichen Veränderungen, d.h. horizontale und vertikale Sitzpositionen sowie eine Neigung der Rückenlehne, der Sitzfläche oder dergleichen bei den Messungen der Leerwerte berücksichtigt werden.

Figur 3 illustriert eine graphische Darstellung des Pegels von gemessenen Leerwerten bei Messung durch zwei an verschiedenen Positionen angeordneten Empfangsantennen A und B bei einer Variierung der horizontalen Rastposition des Sitzes 1, beispielsweise des Vordersitzes.

Bei einem Wellenfeld 4a, 5a, 6a, 7a existieren Orte, an denen das Wellenfeld 4a, 5a, 6a, 7a ein Minimum aufweist und Orte, an denen das Wellenfeld 4a, 5a, 6a, 7a entsprechend ein Maximum aufweist. Wird die Sendeeinrichtung und/oder die Empfangseinrichtung der Basisstation 2 mit vorzugsweise zwei oder mehreren Sende- bzw. Empfangsantennen ausgestattet, welche in einem vordefinierten Abstand voneinander beabstandet sind, beispielsweise mit dem Abstand der halben Wellenlänge der reflektierten Hochfrequenzwellen, so kann an jedem Ort und bei jedem Messwert beispielsweise das Maximum beider Reflektorantworten ausgewählt werden. Dies wird im allgemeinen als so genannte Antennen-Diversity bezeichnet.

In der in Figur 3 illustrierten graphischen Darstellung sind die durch die zwei Empfangsantennen A und B, welche im Abstand der halben Wellenlänge der Reflektorantwortsignale voneinander beabstandet sind, gemessenen Reflektorantworten dargestellt, d.h. die Pegel der Leerwerte bei verschiedenen horizontalen Rastpositionen des Sitzes 1. Für eine Berechnung eines oder mehrerer Referenzwerte für den Sitz 1 bzw. für jeden Reflektor des Sitzes 1 können die Ergebnisse der Leerwert-Pegelmessungen bei unterschiedlichen Sitzpositionen sowie die Pegelmessungen mit den unterschiedlichen Empfangsantennen miteinander unter Verwendung wiederum eines vorbestimmten Algorithmus kombiniert und gemeinsam ausgewertet werden.

Im folgenden wird rein exemplarisch ein möglicher Algorithmus bzw. ein vorteilhafter Verfahrensablauf zur Bestimmung eines dem Sitz 1 zugeordneten Referenzwertes aus den Messungen der Leerwertpegel gemäß den Figuren 2 und 3 näher erläutert.

Zunächst erfolgt vorzugsweise eine Leerwertmessung über sämtliche mögliche horizontale Sitzpositionen 1 bis 13, wobei sich der Sitz 1 zunächst in der obersten vertikalen Position befindet. Zudem wird die Leerwertmessung mit einer Antennen-Diversity, d.h. mit vorteilhaft den beiden voneinander beabstandeten Antennen A und B durchgeführt, wie in Figur 3 dargestellt ist. An jeder Sitzposition 1 bis 13 wird beispielsweise der Maximalwert aus den beiden gemessenen Reflektorantworten an den Antennen A und B ausgewählt und weiterverwendet. Dadurch wird der Maximalpegelverlauf für die einzelnen horizontalen Sitzpositionen 1 bis 13 bei der obersten vertikalen Sitzposition des Sitzes 1 erhalten.

In analoger Weise werden Leerwertmessungen über alle horizontalen Sitzpositionen 1 bis 13 in der untersten vertikalen Position des Sitzes 1 mit den beiden Antennen A und B durchgeführt, wobei wiederum an jedem Messpunkt beispielsweise der Maximalwert aus den gemessenen Reflektorantworten ausgewählt wird. Dadurch erhält man auch in der untersten vertikalen Sitzposition analog den Maximalpegelverlauf für die einzelnen horizontalen Sitzpositionen 1 bis 13.

Anschließend wird vorteilhaft aus diesen beiden Maximalpegelverläufen an jedem einzelnen Messpunkt nach einem vorbestimmten Algorithmus, beispielsweise durch eine Mittelwertbildung oder eine Auswahl des Minimums der beiden Pegelverläufe, der Leerwertverlauf der Leerwerte bei horizontaler Variation der Sitzposition bestimmt.

Zusätzlich erfolgt vorzugsweise eine Leerwertmessung über alle vertikalen Sitzpositionen bei beispielsweise einer vorbestimmten festen horizontalen Sitzposition des Sitzes 1 mit wiederum der oben erläuterten Antennen-Diversity, d.h. mit einer Messung an den beiden Antennen A und B. Analog zu den oben ausgeführten Maximalpegelverläufen wird wiederum an jedem Messpunkt beispielsweise der Maximalwert aus den beiden gemessenen Reflektorantworten durch die Antennen A und B ausgewählt und daraus der Maximalpegelverlauf der Leerwerte bei einer Variation der Sitzposition in vertikaler Richtung bei fester horizontaler Position des Sitzes 1 bestimmt.

Abschließend kann für den betrachteten Reflektor ein zugeordneter Referenzwert durch das absolute Minimum des oben beschriebenen berechneten Leerwertverlaufs für eine Variation der Sitzposition in horizontaler Richtung und des Maximalpegelverlaufs für die Leerwerte bei Variation der Sitzposition in vertikaler Richtung definiert werden.

Diese vorzugsweise vorab durchgeführten Berechnungen können beispielsweise in einer mit der Basisstation 2 verbundenen zentralen Steuereinrichtung durchgeführt werden. Die zentrale Steuereinrichtung ist vorzugsweise, wie oben bereits erläutert, mit einer zugeordneten Speichereinrichtung zum Abspeichern der vorab bestimmten Referenzwerte in beispielsweise geeigneten Referenzwert-Tabellen verbunden.

Das oben erläuterte exemplarische Verfahren zur Bestimmung eines einem bestimmten Reflektor zugeordneten Referenzwertes ist lediglich exemplarisch zu verstehen. Aus den einzelnen Messdaten der unterschiedlichsten Leerwertmessungen der mehreren Antennen bei den unterschiedlichsten Sitzpositionen des Sitzes 1 können beliebige geeignete Algorithmen verwendet werden, um den jeweiligen Reflektoren bzw. dem Sitz einen geeigneten Referenzwert zuzuordnen.

Beispielsweise kann für jeden Reflektor ein von der jeweiligen Sitzposition des Sitzes 1 unabhängiger Referenzwert aus den einzelnen Messwerten bestimmt werden, der einen großen Signalabstand zwischen einem unbelegten und einem belegten Sitzzustand gewährleistet. Dadurch wird das System insgesamt unempfindlicher hinsichtlich falscher Klassifizierungen.

Aus den jeweiligen berechneten Referenzwerten und den durch die Empfangseinrichtung empfangenen Reflektorantwortsignalen kann im Sitzbelegungs-Erkennungsbetrieb des Systems die Dämpfungsdicke d nach beispielsweise folgender Formel berechnet werden:

$$\text{Dämpfungsdicke } d = -\ln \frac{\text{gedämpfter Wert}}{\text{Referenzwert}}, \qquad (1)$$

wobei "gedämpfter Wert" dem an der Basisstation 2 empfangenem Pegel der Reflektorantworten entspricht.

Die nach der obigen Formel berechnete Dämpfungsdicke d, die beispielsweise für jeden Reflektor einzeln bestimmt wird, wird anschließend zur Klassifizierung der auf dem Sitz 1 sitzenden Person herangezogen. Der Wert der Dämpfungsdicke d ist umso größer, je weniger Pegel an der Basisstation 2 empfangen wird, d.h. der Sitz ist beispielsweise durch eine erwachsene Person belegt. Andererseits ist der Wert der Dämpfungsdicke d umso geringer, je mehr Pegel an der Basisstation 2 empfangen wird. Dies bedeutet, dass der Sitz sich in einem unbelegten Zustand befindet. In Abhängigkeit einer derartigen Klassifizierung der Sitzbelegung können beispielsweise entsprechende Sicherheitssysteme des Kraftfahrzeuges, beispielsweise eine Gurtstraffung oder ein Airbag, im Falle eines Unfalls aktiviert werden.

Somit schafft die vorliegende Erfindung ein Verfahren zum Auswerten von Reflektorantwortsignalen eines Sitzbelegungs-Erkennungssystems durch vorab Bestimmen von zuverlässigen Referenzwerten. Vorteilhaft muss für jeden Reflektor ein zugeordneter Referenzwert lediglich im Laufe der Entwicklung für einen vorbestimmten Fahrzeugtyp oder einen vorbestimmten Sitztyp bestimmt werden.

Nach Umbauten im Kraftfahrzeug, beispielsweise bei Einbau eines neuen Sitzes oder bei Modifikationen des vorhandenen Sitzes, kann zusätzlich eine Nachkalibrierung des Referenzwertes bzw. der Referenzwerte vorteilhaft sein. Dabei wird beispielsweise ein sich in dem Kraftfahrzeug befindliches Dopplerradarsystem verwendet, um eine Nichtbelegung des nachzukalibrierenden Sitzes während einer automatischen Nachkalibrierung zu gewährleisten.

Eine derartige Nachkalibrierung kann beispielsweise wie folgt ablaufen. Der nachzukalibrierende Sitz wird in einer definierten Sitzposition verrastet und eine oder mehrere Leerwertmessungen werden in dieser definierten Sitzposition vorzugsweise automatisch durchgeführt. Anschließend wird der Sitz automatisch geringfügig verschoben, beispielsweise in horizontaler und/oder vertikaler Richtung, wobei wiederum Leerwertmessungen durchgeführt werden.

Anschließend werden die gemessenen Leerwerte aus den Leerwertmessungen mit den entsprechenden Leerwerten aus den vorab durchgeführten Messungen verglichen, wobei je nach Abweichung ein neuer Referenzwert definiert und gegebenenfalls abgespeichert wird.

Eine derartige Nachkalibrierung des Sitzes kann vorzugsweise automatisch durchgeführt werden, jedoch ist auch eine manuelle Durchführung vorstellbar.

Obwohl die vorliegende Erfindung anhand bevorzugter Ausführungsbeispiele vorstehend beschrieben wurde, ist sie darauf nicht beschränkt, sondern auf vielfältige Weise modifizierbar.

Beispielsweise können verschieden geeignete Algorithmen zur Berechnung des oder der Referenzwerte aus den jeweiligen Leerwertmessungen verwendet werden. Beispielsweise wird für alle Reflektoren jeweils ein Referenzwert ermittelt, wobei lediglich das Minimum aller Referenzwerte als für den Sitz gemeinsamer Referenzwert berechnet wird. Denkbar sind selbstverständlich auch andere statistische Ansätze zur Bildung eines gemeinsamen Referenzwertes für alle Reflektoren, wie beispielsweise die Bildung des Mittelwertes der einzelnen Referenzwerte oder eine Berechnung des Minimums unter Berücksichtigung der Standard-Abweichung.

**Patentansprüche**

1. Verfahren zum Auswerten von Reflektorantwortsignalen (4a, 5a, 6a, 7a) eines Systems zur Erkennung einer Sitzbelegung eines Sitzes (1), insbesondere in einem Kraftfahrzeug, wobei das System mindestens eine Basisstation (2) mit einer Sendeeinrichtung zum Aussenden von Signalen (3) und mit einer Empfangseinrichtung zum Empfangen der an mindestens einem dem Sitz (1) zugeordneten Reflektor (4, 5, 6, 7) reflektierten Reflektorantwortsignalen (4a, 5a, 6a, 7a) zur Erkennung einer Sitzbelegung des Sitzes (1) aufweist, **dadurch gekennzeichnet daß** das Verfahren folgende Verfahrensschritte umfasst:

   vorab Messen von mehreren jeweils einer vorbestimmten Sitzposition des Sitzes (1) zugeordneten Reflektorantwort-Leerwerten für den sich im unbelegten Sitzzustand befindlichen Sitz (1);
   vorab Bestimmen mindestens eines dem Sitz zugeordneten Reflektorantwort-Referenzwertes aus den vorab gemessenen Reflektorantwort-Leerwerten unter Verwendung eines vorbestimmten Algorithmus;
   Empfangen von durch den mindestens einen Reflektor (4, 5, 6, 7) reflektierten Reflektorantwortsignalen (4a, 5a, 6a, 7a) durch die Empfangseinrichtung der Basisstation (2); und
   Berechnen der Dämpfungsdicke (d) aus den empfangenen Reflektorantwortsignalen (4a, 5a, 6a, 7a) und dem mindestens einen vorab bestimmten Reflektorantwort-Referenzwert für eine Erkennung einer Sitzbelegung des Sitzes (1).

2. Verfahren nach Anspruch 1,
**dadurch gekennzeichnet,**
**dass** für vorbestimmte Sitzpositionen, die sich vorzugsweise durch die horizontale Position, vertikale Position und/ oder die Neigung der Rückenlehne, die Neigung der Sitzfläche und/oder eines weiteren Teils des Sitzes (1) unterscheiden, jeweils ein einem Reflektor (4, 5, 6, 7) zugeordneter Reflektorantwort-Leerwert gemessen wird.

3. Verfahren nach Anspruch 1 oder 2,
**dadurch gekennzeichnet,**
**dass** die Reflektorantwort-Leerwerte sowohl in der obersten als auch in der untersten vertikalen Sitzposition des Sitzes (1) über alle horizontalen Sitzpositionen des Sitzes gemessen werden.

4. Verfahren nach wenigstens einem der vorhergehenden Ansprüche,
**dadurch gekennzeichnet,**
**dass** der mindestens eine einem Reflektor (4, 5, 6, 7) zugeordnete Reflektorantwort-Referenzwert als Mittelwert, gewichteter Mittelwert, Minimum oder als Minimum unter Berücksichtigung der Standard-Abweichung der entsprechenden gemessenen Reflektorantwort-Leerwerte bestimmt wird.

5. Verfahren nach wenigstens einem der vorhergehenden Ansprüche,
**dadurch gekennzeichnet,**
**dass** für vorbestimmte Sitzpositionen, die sich vorzugsweise in ihrer horizontalen Position, vertikalen Position und/ oder ihrer Neigung der Rückenlehne, ihrer Neigung der Sitzfläche und/oder eines weiteren Teils des Sitzes (1) unterscheiden, jeweils ein Reflektorantwort-Referenzwert bestimmt wird.

6. Verfahren nach wenigstens einem der vorhergehenden Ansprüche,
**dadurch gekennzeichnet,**
**dass** für jeden Reflektor (4, 5, 6, 7) des Sitzes (1) ein Reflektorantwort-Referenzwert bestimmt wird.

7. Verfahren nach Anspruch 6,
**dadurch gekennzeichnet,**
**dass** ein gemeinsamer Reflektorantwort-Referenzwert für den Sitz (1) aus den einzelnen Reflektorantwort-Referenzwerten der einzelnen Reflektoren (4, 5, 6, 7) unter Verwendung eines vorbestimmten Algorithmus ermittelt wird.

8. Verfahren nach wenigstens einem der vorhergehenden Ansprüche,
**dadurch gekennzeichnet,**
**dass** eine Speichereinrichtung zum vorab Abspeichern des mindestens einen Reflektorantwort-Referenzwertes, beispielsweise in einer Referenzwert-Tabelle, vorgesehen wird.

9. Verfahren nach wenigstens einem der vorhergehenden Ansprüche,
**dadurch gekennzeichnet,**
**dass** mindestens zwei Sendeantennen und/oder mindestens zwei Empfangsantennen (A, B) in der Sendeeinrichtung bzw. Empfangseinrichtung der Basisstation (2) vorgesehen werden, welche mit einem definierten Abstand, beispielsweise in etwa der halben Wellenlänge der Reflektorantwortsignale, voneinander beabstandet sind, wobei die einzelnen Messungen bzgl. der mindestens zwei Sende- und/oder Empfangsantennen (A, B) in dem vorbestimmten Algorithmus zur vorab Bestimmung des mindestens einen Reflektorantwort-Referenzwertes berücksichtigt werden.

10. Verfahren nach wenigstens einem der vorhergehenden Ansprüche,
**dadurch gekennzeichnet,**
**dass** eine Nachkalibrierung des mindestens einen Reflektorantwort-Referenzwertes automatisch oder manuell durchgeführt werden kann.

**Claims**

1. Method for evaluating the reflector answer signals (4a, 5a, 6a, 7a) of a system for recognising the occupancy of a seat (1), in particular in a motor vehicle, with the system comprising at least one base station (2) with a transmitter for sending signals (3) and a receiver for receiving reflector answer signals (4a, 5a, 6a, 7a) reflected to at least one reflector (4, 5, 6, 7) allocated to the seat (1) for recognising the occupancy of a seat (1), **characterised in that** the method including the following method steps:

prior measurement of a number of reflector answer empty values that have been allocated in each instance to a predetermined seat position of a seat (1) for the unoccupied seat (1);

prior determination of at least one reflector answer reference value allocated to a seat from the reflector answer empty values measured beforehand with the aid of a predetermined algorithm;

receiving reflector answer signals (4a, 5a, 6a, 7a) reflected by the at least one reflector (4, 5, 6, 7) by the receiver of the base station (2); and

calculating the attenuation thickness (d) from the received reflector answer signals (4a, 5a, 6a, 7a) and the at least one previously determined reflector answer reference value for recognising the occupancy of a seat (1).

2. Method according to claim 1,
**characterised in that**,
for predetermined seat positions, which preferably vary with respect to a horizontal seat position, a vertical seat position, and/or a tilting of the backrest, a tilting of the seat surface and/or an additional part of a seat (1), a reflector answer empty value allocated to a reflector (4, 5, 6, 7) is measured in each instance.

3. Method according to claim 1 or 2,
**characterised in that**,
the reflector answer empty values are measured both in the top and in the bottom vertical seat position of a seat (1) across all the horizontal seat positions of a seat.

4. Method according to at least one of the preceding claims,
**characterised in that**,
the at least one reflector answer reference value allocated to a reflector (4, 5, 6, 7) is determined as an average value, a weighted average value, a minimum value or as a minimum value in consideration of the standard deviation of the correspondingly measured reflector answer empty values.

5. Method according to at least one of the preceding claims,
**characterised in that**,
for predetermined seat positions, which preferably vary with respect to their horizontal position, the vertical position, and/or the tilting of the backrest, the tilting of the seat surface and/or an additional part of a seat (1), a reflector answer empty value is determined in each instance.

6. Method according to at least one of the preceding claims,
**characterised in that**,
a reflector answer reference value is determined for each reflector (4, 5, 6, 7) of the seat (1).

7. Method according to claim 6,
**characterised in that**,
a common reflector answer reference value is determined for the seat (1) from the individual reflector answer reference values of the individual reflectors (4, 5, 6, 7) with the aid of a predetermined algorithm.

8. Method according to at least one of the preceding claims,
**characterised in that**,
provision is made for a storage facility for the prior storage of the at least one reflector answer reference value in a reference value table for example.

9. Method according to at least one of the preceding claims,
**characterised in that**,
provision is made for at least two transmission antennas and/or at least two reception antennas (A, B) in the transmitter or in the receiver of the base station (2), which are at a defined distance from each other, for example, approximately half the wave length of the reflector answer signals, with the individual measurements or the at least two transmission antennas and/or reception antennas (A, B) being taken into account in the predetermined algorithm in order to prior determine the at least one reflector answer reference value.

**10.** Method according to at least one of the preceding claims,
**characterised in that**,
a recalibration of the at least one reflector answer reference value can be carried out automatically or manually.

## Revendications

**1.** Procédé pour analyser des signaux de réponse de réflecteurs (4a, 5a, 6a, 7a) d'un système destiné à reconnaître une occupation d'un siège (1), en particulier dans un véhicule automobile, dans lequel le système comprend au moins une station de base (2) qui possède un dispositif d'émission destiné à émettre des signaux (3) et un dispositif de réception destiné à recevoir les signaux de réponse de réflecteurs (4a, 5a, 6a, 7a) qui sont réfléchis sur au moins un réflecteur (4, 5, 6, 7) associé au siège (1), pour reconnaître une occupation du siège (1), **caractérisé en ce que** le procédé comprend les étapes de procédé suivantes :

au préalable, mesure d'une ou de plusieurs valeurs à vide de réponses de réflecteurs associées chacune à une position prédéterminée du siège (1) pour le siège (1) se trouvant dans un état non occupé ;
au préalable, détermination d'au moins une valeur de référence de réponse de réflecteurs associée au siège, tirée des valeurs à vide de réponses de réflecteurs mesurées au préalable, avec utilisation d'un algorithme prédéterminé ;
réception par le dispositif de réception de la station de base (2) de signaux de réponse de réflecteurs (4a, 5a, 6a, 7a) réfléchis par l'au moins un réflecteur (4, 5, 6, 7) ; et
calcul du taux d'affaiblissement (d) à partir des signaux de réponse de réflecteurs reçus (4a, 5a, 6a, 7a) et de l'au moins une valeur de référence de réponse de réflecteurs déterminée au préalable, pour une reconnaissance d'une occupation du siège (1).

**2.** Procédé selon la revendication 1, **caractérisé en ce qu'**une valeur à vide de réponse de réflecteur associée à un réflecteur (4, 5, 6, 7) est mesurée pour chacune des positions de siège prédéterminées qui se distinguent de préférence par la position horizontale, la position verticale et/ou l'inclinaison du dossier, l'inclinaison de la surface d'assise et/ou d'une autre partie du siège (1).

**3.** Procédé selon la revendication 1, **caractérisé en ce que** les valeurs à vide de réponses de réflecteurs sont mesurées aussi bien dans la position verticale extrême supérieure que dans la position verticale extrême inférieure du siège (1), sur toutes les positions horizontales du siège.

**4.** Procédé selon au moins une des revendications précédentes, **caractérisé en ce que** l'au moins une valeur de référence de réponse de réflecteur associée à un réflecteur (4, 5, 6, 7) est déterminée comme moyenne, moyenne pondérée, minimum ou minimum avec prise en compte de l'écart standard des valeurs à vide de réponses de réflecteurs mesurées correspondantes.

**5.** Procédé selon au moins une des revendications précédentes, **caractérisé en ce qu'**une valeur de référence de réponse de réflecteurs est déterminée, pour chacune des positions de siège prédéterminées qui se distinguent de préférence par leur position horizontale, leur position verticale et/ou leur inclinaison du dossier, leur inclinaison de la surface d'assise et/ou d'une autre partie du siège (1).

**6.** Procédé selon au moins une des revendications précédentes, **caractérisé en ce qu'**une valeur de référence de réponse de réflecteurs est déterminée pour chaque réflecteur (4, 5, 6, 7) du siège (1).

**7.** Procédé selon la revendication 6, **caractérisé en qu'**une valeur de référence de réponse de réflecteurs commune pour le siège (1) est obtenue à partir des différentes valeurs de référence de réponse de réflecteurs des différents réflecteurs (4, 5, 6, 7) avec utilisation d'un algorithme prédéterminé.

**8.** Procédé selon au moins une des revendications précédentes, **caractérisé en ce qu'**un dispositif de mémoire est prévu pour la mémorisation préalable de l'au moins une valeur de référence de réponse de réflecteurs, par exemple dans une table de valeurs de référence.

**9.** Procédé selon au moins une des revendications précédentes, **caractérisé**

**en ce qu'**il est prévu dans le dispositif d'émission et respectivement dans le dispositif de réception de la station de base (2) au moins deux antennes d'émission et/ou au moins deux antennes de réception (A, B) qui sont espacées l'une de l'autre d'une distance définie, par exemple d'à peu près la moitié de la longueur d'onde des signaux de réponse de réflecteurs, les différentes mesures relatives aux au moins deux antennes d'émission et/ou de réception (A, B) étant prises en compte dans l'algorithme prédéterminé pour la détermination préalable de l'au moins une valeur de référence de réponse de réflecteurs.

10. Procédé selon au moins une des revendications précédentes, **caractérisé en ce qu'**un post-calibrage de l'au moins une valeur de référence de réponse de réflecteurs peut être exécutée automatiquement ou manuellement.

FIG 1

## FIG 2

Leerwerte bei Variation
der Sitzposition

—— Sitz in unterster Position
—— Sitz in oberster Position

Pegel [mV]

Rastposition des Vordersitzes

## FIG 3

Leerwerte bei
verschiedenen Antennen

—— Antenne A
—— Antenne B

Pegel [mV]

Rastposition des Vordersitzes

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004045917 A